# EUROPÄISCHE PATENTSCHRIFT

(11) **EP 2 525 089 B1**
(45) Veröffentlichungstag und Bekanntmachung des Hinweises auf die Patenterteilung: **18.05.2016**
(21) Anmeldenummer: 12159164.8
(22) Anmeldetag: 13.03.2012
(51) Int. Cl.: F03D 80/00, F03D 15/00

(54) **Anordnung zur Aufhängung eines Getriebes einer Windkraftanlage**
Assembly for mounting a transmission system of a wind power assembly
Agencement destiné à la suspension d'un engrenage d'une éolienne

(30) Priorität: 17.05.2011 DE 102011075953
(43) Veröffentlichungstag der Anmeldung: 21.11.2012
(73) Patentinhaber: ZF Friedrichshafen AG, 88038 Friedrichshafen (DE)
(72) Erfinder: Betz, Andreas, 88677 Markdorf (DE); Kessler, Andreas, 88677 Markdorf (DE)

(56) Entgegenhaltungen:
- BE-A3- 1 017 836
- DE-B- 1 171 690

## Beschreibung

Die Erfindung betrifft eine Anordnung zur Aufhängung eines Getriebes einer Windkraftanlage nach dem Oberbegriff des Patentanspruches 1.

Durch die EP 1 867 871 A2 wurde eine Windkraftanlage mit einer von einem Rotor angetriebenen Rotorwelle und einem Getriebe mit Getriebeeingangswelle bekannt, wobei die Rotorwelle drehfest mit der Getriebeeingangswelle verbunden ist. Die Rotorwelle, die Getriebeeingangswelle und das Getriebe sind über Lager gegenüber einem Maschinenträger, im Folgenden auch Fundament genannt, gelagert und durch Abstützeinrichtungen und Drehmomentstützen abgestützt. Die Abstützeinrichtungen respektive Drehmomentstützen weisen elastische Elemente oder Entkopplungselemente auf, welche zwischen Maschinenträger und Rotorwelle bzw. Getriebegehäuse angeordnet sind. Dadurch können Querkräfte der Rotorwelle und aus dem Drehmoment resultierende Umfangskräfte elastisch aufgenommen werden. Im Rahmen der Elastizität der Abstützeinrichtung treten dabei elastische Verformungen auf, welche zu elastischen Reaktionskräften führen. Darüber hinaus können diese Bewegungen zu einer Drehung des Getriebegehäuses um die Längsachse der Getriebeeingangswelle führen.

Eine weitere Getriebeaufhängung aus dem Stand der Technik ist in der DE 1171690 B beschrieben.

Es ist Aufgabe der vorliegenden Erfindung, eine verbesserte Anordnung eines Getriebes der eingangs genannten Art zu erreichen.

Die Aufgabe der Erfindung wird durch die Merkmale des Patentanspruches 1 gelöst. Vorteilhafte Ausgestaltungen ergeben sich aus den Unteransprüchen.

Erfindungsgemäß ist vorgesehen, dass das Getriebegehäuse über ein mehrgliedriges Gelenkgetriebe gegenüber dem Fundament aufgehängt ist. Das Getriebe ist damit nicht über elastische Elemente oder Entkopplungselemente wie beim Stand der Technik, sondern über eine kinematische Kette, umfassend eine Vielzahl von gelenkig miteinander verbundenen Getriebegliedern, mit dem Fundament, d. h. einem Maschinenträger oder Maschinenhaus verbunden. Ein einzelnes Getriebeglied weist jeweils zwei endseitig angeordnete Gelenke auf, über die es mit einem benachbarten Getriebeglied verbunden ist. Damit wird der Vorteil erreicht, dass sich das Getriebe bei Querbewegungen der Rotorwelle, wie sie im Betrieb der Windkraftanlage auftreten, kraftfrei bewegen, d. h. ausweichen kann. Dabei treten keine nennenswerten Reaktionskräfte auf, wie sie bei elastischen Verformungen von elastischen Elementen oder Entkopplungselementen nach dem Stand der Technik bekannt sind. Damit wird die mechanische Beanspruchung der Getriebeteile reduziert, und das Getriebe wird leichter und kostengünstiger.

Nach einer bevorzugten Ausführungsform weist das Gelenkgetriebe zwei vertikal angeordnete Getriebeglieder, auch kurz Glieder genannt, auf, welche jeweils am Fundament angelenkt, d. h. durch Gelenke verbunden sind. Durch die Vertikal angeordneten Glieder wird eine Horizontalbewegung des Getriebegehäuses kraftfrei zugelassen. Das Fundament bildet ein festes Getriebeglied.

Nach einer weiteren bevorzugten Ausführungsform umfasst das Gelenkgetriebe zwei horizontal angeordnete Getriebeglieder, kurz Glieder genannt, welche jeweils am Getriebegehäuse angelenkt sind. Aufgrund der horizontal angeordneten Glieder ist eine Vertikalbewegung des Getriebegehäuses bei Auftreten von Vertikalbewegungen der Rotorwelle möglich. Das Getriebegehäuse kann somit auch in vertiakler Richtung kraftfrei ausweichen.

Nach einer weiteren bevorzugten Ausführungsform sind die vertikal und horizontal angeordneten Glieder mittelbar oder direkt durch Gelenke miteinander verbunden. Damit ist die kinematische Kette vom Getriebe bzw. Getriebegehäuse zum Fundament geschlossen, das Getriebe ist über die horizontalen und die vertikalen Glieder gegenüber dem Fundamentaufgehängt, wobei das Fundament selbst ein festes Getriebeglied mit zwei Anlenkpunkten für die vertikalen Glieder bildet.

Nach einer weiteren bevorzugten Ausführungsform sind die horizontalen und die vertikalen Glieder gelenkig mit einem Stützring verbunden, welcher außerhalb des Getriebegehäuses angeordnet ist, d. h. das Getriebegehäuse als geschlossener Ring umgibt. Der Stützring bildet somit mit den beiden vertikalen Gliedern und dem Fundament ein erstes Viergelenkgetriebe und gleichzeitig mit den horizontalen Gliedern und dem Getriebegehäuse ein zweites Viergelenkgetriebe. Beide Viergelenkgetriebe sind somit durch den Stützring miteinander gekoppelt. Damit ist eine vollständige und kraftfreie Bewegungsmöglichkeit in vertikaler und horizontaler Richtung, d. h. quer zur Achse der Rotor- und der Getriebeeingangswelle möglich.

Nach einer weiteren bevorzugten Ausführungsform ist anstelle des Stützringes ein diagonal angeordnetes Stützglied, auch Diagonalstrebe genannt, vorgesehen, welches die gemeinsamen Gelenke der horizontalen und der vertikalen Glieder miteinander verbindet. Die Diagonalstrebe weist in einem mittleren Bereich eine ringförmige Struktur auf, welche von der Getriebeeingangswelle durchsetzt wird. Die Getriebeeingangswelle kann sich innerhalb der Ringstruktur frei, d. h. in allen radialen Richtungen bewegen. Die Diagonalstrebe ist vorzugsweise auf der eingangsseitigen Stirnseite des Getriebegehäuses angeordnet, weil in diesem Bereich die geringsten Auslenkungen der Rotorwelle auftreten.

Nach einer weiteren bevorzugten Ausführungsform sind die einzelnen Getriebeglieder als Streben ausgebildet, an deren Enden jeweils Gelenke angeordnet sind. Daraus ergibt sich eine schlanke, gewichtsoptimierte Bauweise für das Gelenkgetriebe zur Aufhängung des Getriebes.

Nach einer weiteren bevorzugten Ausführungsform sind die Gelenke als Drehgelenke ausgebildet, deren Drehachsen parallel zur Längsachse der Rotor- und Getriebeeingangswelle angeordnet sind. Damit wird erreicht, dass die Getriebeglieder bzw. die Streben eine Querbewegung, d. h. eine Bewegung quer zur Längsachse der Getriebeeingangswelle ausüben können. Die beweglichen Gelenke bewegen sich somit in einer gemeinsamen oder in parallelen Ebenen.

Nach einer weiteren bevorzugten Ausführungsform weisen sowohl die vertikalen als auch die horizontalen Streben jeweils die gleiche Länge auf. Damit wird erreicht, dass das Getriebegehäuse bei einer Querbewegung praktisch keine Drehbewegung ausführt.

Nach einer weiteren bevorzugten Ausführungsform weisen die vertikalen Streben eine unterschiedliche Länge auf - dies gilt insbesondere für die Ausführungsform mit der Diagonalstrebe. Durch die Wahl der Länge der Getriebeglieder bzw. der Streben kann eine eventuelle Drehbewegung des Getriebegehäuses beeinflusst werden.

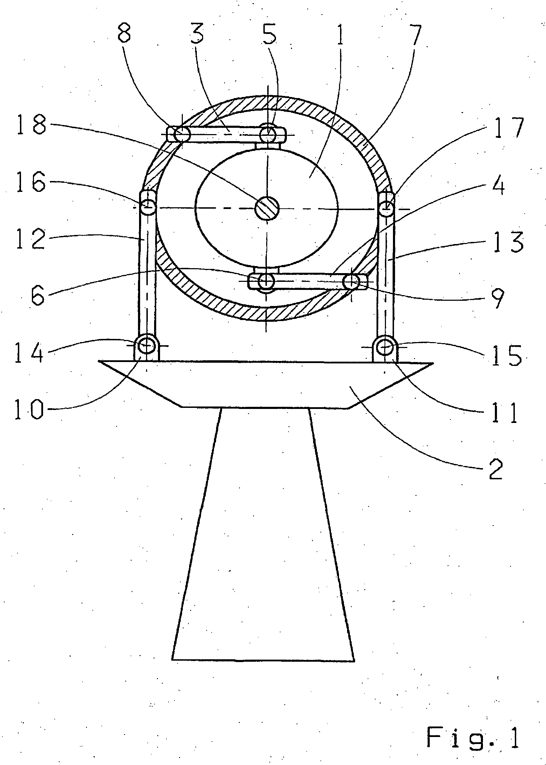

Ein ausführungsbeispiel der Erfindung ist in der Fig. 1, dargestellt und werden im Folgenden näher beschrieben, wobei sich aus der Beschreibung und/oder der Zeichnung weitere Merkmale und/oder Vorteile ergeben können. Es zeigen
Fig. 1 ein Ausführungsbeispiel der Erfindung für eine kinematische Getriebeaufhängung und
Fig. 2 eine kinematische Getriebeaufhängung, nicht gemäß der Erfindung.

Fig. 1 zeigt - als Ausführungsbeispiel der Erfindung - die Aufhängung eines Getriebes 1 gegenüber einem Fundament 2 einer Windkraftanlage. Das Fundament 2 wird auch als Maschinenträger oder Maschinenhaus der Windkraftanlage bezeichnet. Am Getriebe 1 bzw. am Getriebegehäuse 1 sind zwei als Streben 3, 4 ausgebildete, horizontal angeordnete Getriebeglieder (Horizontalstreben 3, 4) über Drehgelenke 5, 6 angelenkt. Das Getriebe 1 wird von einem Stützring 7 umschlossen, an welchem die beiden Horizontalstreben über Drehgelenke 8, 9 angelenkt sind. Das Fundament 2 weist zwei Festlager 10, 11 auf, in welchen zwei als Streben 12, 13 ausgebildete, vertikal angeordnete Getriebeglieder (Vertikalstreben 12, 13) über Drehgelenke 14, 15 abgestützt sind. Die Vertikalstreben 12, 13 sind andererseits über Gelenke 16, 17 am Stützring 7 angelenkt, wobei die Gelenke 8, 9 der Horizontalstreben 3, 4 auf dem Umfang des Stützringes 7 versetzt gegenüber den Gelenken 16, 17 der Vertikalstreben 12, 13 angeordnet sind. Das Getriebe 1 weist eine Getriebeeingangswelle 18 auf, dessen Längsachse senkrecht zur Zeichenebene angeordnet ist. Sämtliche Gelenke 5, 6, 8, 9, 14, 15, 16, 17 sind als Drehgelenke mit Drehachsen ausgebildet, welche parallel zur Längsachse der Getriebeeingangswelle 18 angeordnet sind, d. h. senkrecht zur Zeichenebene verlaufen. Damit ergibt sich ein ebenes Achtgelenkgetriebe, welches sich aus zwei miteinander gekoppelten Viergelenkgetrieben zusammensetzt. Das erste Viergelenkgetriebe umfasst als erstes festes Getriebeglied das Fundament 2, ferner die beiden Vertikalstreben 12, 13 und den Stützring 7 sowie die Gelenke 14, 15, 16, 17. Das zweite Viergelenkgetriebe umfasst als Getriebeglieder den Stützring 7, die beiden Horizontalstreben 3,4 sowie das Getriebegehäuse 1 zwischen den beiden Gelenken 5, 6.

Wenn im Betrieb der Windkraftanlage Querbewegungen der nicht- dargestellten Rotorwelle, welche fest mit der Getriebeeingangswelle 18 verbunden ist, auftreten, werden diese Querbewegungen, sei es in der Horizontalen oder sei es in der Vertikalen, auf das Getriebe 1 übertragen. Aufgrund der oben beschriebenen Getriebeaufhängung, ausgebildet als Achtgelenkgetriebe, können diese Querbewegungen kraftfrei, d. h. ohne Reaktionskräfte aufgenommen werden. Bei Horizontalbewegungen der Getriebeeingangswelle 18 schwenken die Vertikalstreben 12, 13, um die festen Gelenke 14, 15 und lassen somit eine Horizontalbewegung des Getriebes 1 zu. Bei Vertikalbewegungen der Getriebeeingangswelle 18 schwenken die Horizontalstreben 3, 4 um die Gelenke 8, 9 und lassen somit eine Vertikalbewegung des Getriebes 1 zu. Die Folge dieser kinematischen Getriebeaufhängung ist, dass bei Querbewegungen praktisch keine Kräfte auf das Getriebegehäuse 1 oder die Getriebeeingangswelle 18 übertragen werden. Damit werden das Getriebe 1 und seine Teile mechanisch weniger belastet.

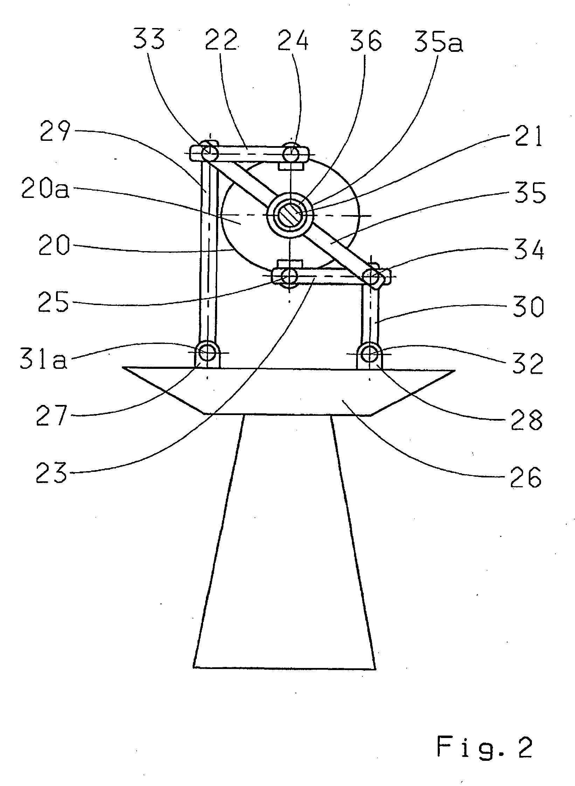

Fig. 2 zeigt eine Getriebeaufhängung nicht gemäß der Erfindung. Ein Getriebe 20 weist eine Getriebeeingangswelle 21, im Folgenden kurz Getriebewelle 21 genannt, und eine Getriebestirnseite 20a auf. An der Stirnseite 20a des Getriebes 20, im Folgenden auch Getriebegehäuse 20 genannt, sind zwei Horizontalstreben 22, 23 über Drehgelenke 24, 25 angelenkt. Am Fundament 26 -sind zwei Festlager 27, 28 angeordnet, welche jeweils eine Vertikalstrebe 29, 30 über Drehgelenke 31, 32 gegenüber dem Fundament 26 abstützen. Die Vertikalstreben 29, 30, die unterschiedliche Längen aufweisen, sind an ihren oberen Enden über gemeinsame Gelenke 33, 34 mit den Horizontalstreben 22, 23 verbunden. Zwischen den Gelenken 33, 34 ist ein Stützglied 35 diagonal angeordnet, im Folgenden auch Diagonalstrebe 35 genannt. Die Diagonalstrebe 35 ist endseitig über die gemeinsamen Gelenke 33, 34 sowohl mit den beiden Vertikalstreben 29, 30 als auch mit den beiden Horizontalstreben 22, 23 verbunden. Im mittleren Bereich, d. h. im Bereich der Getriebewelle 21 ist die Diagonalstrebe 35 zu einer ringförmigen Struktur 35a, auch Auge 35a genannt, erweitert. Zwischen Getriebewelle 21 und Auge 35a ist ein Ringspalt 36 belassen, um Relativbewegungen zwischen Getriebewelle 21 und dem Auge 35a zuzulassen.

Die Getriebeaufhängung gemäß Fig. 2 unterscheidet sich von der Getriebeaufhängung gemäß Fig. 1 im Wesentlichen dadurch, dass der Stützring 7 gemäß Fig. 1 durch die Diagonalstrebe 35 ersetzt wurde und die Horizontal- und Vertikalstreben 22, 23, 29, 30 durch gemeinsame Gelenke 33, 34 miteinander verbunden sind. Gegenüber der Ausführungsform gemäß Fig. 1 werden also zwei Gelenke eingespart. Die Ausführungsform gemäß Fig. 2 wird vorzugsweise auf der Stirnseite 20a des Getriebes 20 angeordnet. Diese Anordnung ist deswegen besonders vorteilhaft, weil in diesem Bereich die geringsten Auslenkungen der Rotorwelle, welche direkt mit der Getriebewelle 21 verbunden ist, auftreten. Die Getriebeaufhängung mit Diagonalstrebe 35 kann allerdings auch auf der ausgangsseitigen Stirnseite des Getriebes 20 angeordnet werden. Die Ausführungsform gemäß Fig. 1 mit Stützring 7 kann dagegen an jeder beliebigen Stelle, in Axialrichtung der Getriebewelle 18 gesehen, angeordnet werden.

Die Lagerung des Getriebes 1 bzw. 20 erfolgt bevorzugt - was nicht dargestellt ist - über die Rotorwelle, welche ihrerseits am Fundament bzw. am Maschinengehäuse abgestützt und gelagert ist. Die Getriebeeingangswelle 18 bzw. 21 ist starr, z. B. über eine Schrumpfverbindung mit der Rotorwelle verbunden, sodass die Gewichtskraft des Getriebes von der Rotorwelle aufgenommen wird.

Die Funktion des Ausführungsbeispieles gemäß Fig. 2 ist ähnlich wie die des Ausführungsbeispieles gemäß Fig. 1: Bei horizontalen Auslenkungen der Getriebewelle 21, verursacht durch die mit ihr verbundene, nicht dargestellte Rotorwelle, kann das Getriebe 20 horizontal ausweichen, indem die Vertikalstreben 29, 30 um die Festlager 27, 28 schwenken. Bei einer Vertikalbewegung der Getriebewelle 21 kann das Getriebe 20 in vertikaler Richtung ausweichen, indem die Horizontalstreben 22, 23 um die Gelenke 33, 34 nach oben oder unten ausschwenken. Damit ist auch hier ein kraftfreies Ausweichen des Getriebes 20 bei Querbewegungen der Rotorwelle möglich.

Die oben erwähnten Gelenke, welche die einzelnen Getriebeglieder miteinander verbinden, sind grundsätzlich - wie beschrieben -als Drehgelenke mit zueinander parallelen Drehachsen ausgebildet. Möglich ist jedoch auch, eine Beweglichkeit in Axialrichtung der Getriebewelle zuzulassen. Dies kann z. B. durch eine begrenzte Elastizität in den Gelenken erreicht werden.

### Bezugszeichen

- 1: Getriebe(gehäuse)
- 2: Fundament
- 3: Horizontalstrebe
- 4: Horizontalstrebe
- 5: Gelenk
- 6: Gelenk
- 7: Stützring
- 8: Gelenk
- 9: Gelenk
- 10: Lager
- 11: Lager
- 12: Vertikalstrebe
- 13: Vertikalstrebe
- 14: Gelenk
- 15: Gelenk
- 16: Gelenk
- 17: Gelenk
- 18: Getriebeeingangswelle

- 20: Getriebe(gehäuse)
- 20a: Stirnseite
- 21: Getriebewelle
- 22: Horizontalstrebe
- 23: Horizontalstrebe
- 24: Gelenk
- 25: Gelenk
- 26: Fundament
- 27: Festlager
- 28: Festlager
- 29: Vertikalstrebe
- 30: Vertikalstrebe
- 31: Gelenk
- 32: Gelenk
- 33: Gelenk
- 34: Gelenk
- 35: Diagonalstrebe
- 35a: Auge
- 36: Ringspalt

## Patentansprüche

1. Anordnung zur Aufhängung eines Getriebes (1) einer Windkraftanlage gegenüber einem Fundament (2), wobei das Getriebe (1) ein Getriebegehäuse (1) und eine Getriebeeingangswelle (18) aufweist, welche fest mit einer antreibenden Rotorwelle verbunden ist, wobei das Getriebenehäuse (1) über ein mehrgliedriges Gelenkgetriebe (3, 4, 7; 12, 13 ) gegenüber dem Fundament (2) angelenkt ist; **dadurch gekennzeichnet, dass**
die vertikal angeordneten Getriebeglieder (12, 13) und die horizontal angeordneten Getriebeglieder (3, 4) mittelbar durch Gelenke (8, 9, 16,17) miteinander verbunden sind; und dass
die horizontal und die vertikal angeordneten Getriebeglieder (3, 4, 13, 12) gelenkig mit einem Stützring (7) verbunden sind, welcher außerhalb des Getriebegehäuses (1) angeordnet ist.

2. Anordnung nach Anspruch 1, **dadurch gekennzeichnet, dass** das Gelenkgetriebe zwei vertikal angeordnete Getriebeglieder (12, 13) aufweist, welche jeweils am Fundament (2) angelenkt sind.

3. Anordnung nach Anspruch 1 oder 2, **dadurch gekennzeichnet, dass** das Gelenkgetriebe zwei horizontal angeordnete Getriebeglieder (3, 4) aufweist, welche am Getriebegehäuse (1) angelenkt sind.

4. Anordnung nach einem der vorhergehenden Ansprüche, **dadurch gekennzeichnet, dass** die horizontal und vertikal angeordneten Getriebeglieder als Streben (3, 4, 12, 13) ausgebildet sind.

5. Anordnung nach einem der vorhergehenden Ansprüche, **dadurch gekennzeichnet, dass** die Gelenke als Drehgelenke (5, 6, 8, 9, 14, 15, 16, 17) mit Drehachsen ausgebildet sind, welche parallel zur Längsachse der Getriebeeingangswelle (18) angeordnet sind.

6. Anordnung nach Anspruch 4 oder 5, **dadurch gekennzeichnet, dass** die vertikal angeordneten Streben (12, 13) die gleiche Länge aufweisen.

7. Anordnung nach einem der Ansprüche 4 bis 6, **dadurch gekennzeichnet, dass** die horizontal angeordneten Streben (3, 4) die gleiche Länge aufweisen.

## Claims

1. Arrangement for suspending a transmission (1) of a wind turbine with respect to a foundation (2), wherein the transmission (1) has a transmission housing (1) and a transmission input shaft (18) which is fixedly connected to a driving rotor shaft, wherein the transmission housing (1) is articulated with respect to the foundation (2) via a multi-element linkage mechanism (3, 4, 7; 12, 13); **characterized in that** the vertically arranged mechanism elements (12, 13) and the horizontally arranged mechanism elements (3, 4) are indirectly connected to one another by means of joints (8, 9, 16, 17); and **in that** the horizontally and the vertically arranged mechanism elements (3, 4, 13, 12) are articulatedly connected to a supporting ring (7) which is arranged outside the transmission housing (1).

2. Arrangement according to Claim 1, **characterized in that** the linkage mechanism has two vertically arranged mechanism elements (12, 13) which are each articulated on the foundation (2).

3. Arrangement according to Claim 1 or 2, **characterized in that** the linkage mechanism has two horizontally arranged mechanism elements (3, 4) which are articulated on the transmission housing (1).

4. Arrangement according to one of the preceding claims, **characterized in that** the horizontally and vertically arranged mechanism elements are formed as struts (3, 4, 12, 13).

5. Arrangement according to one of the preceding claims, **characterized in that** the joints are formed as pivot joints (5, 6, 8, 9, 14, 15, 16, 17) with pivot axes which are arranged parallel to the longitudinal axis of the transmission input shaft (18).

6. Arrangement according to Claim 4 or 5, **characterized in that** the vertically arranged struts (12, 13) have the same length.

7. Arrangement according to one of Claims 4 to 6, **characterized in that** the horizontally arranged struts (3, 4) have the same length.

## Revendications

1. Agencement destiné à la suspension d'une transmission (1) d'une éolienne par rapport à une fondation (2), la transmission (1) présentant un boîtier de transmission (1) et un arbre d'entrée de transmission (18) qui est connecté fixement à un arbre de rotor d'entraînement, le boîtier de transmission (1) étant articulé par le biais d'une transmission articulée à plusieurs organes (3, 4, 7 ; 12, 13) par rapport à la fondation (2) ; **caractérisé en ce que**
les organes de transmission disposés verticalement (12, 13) et les organes de transmission disposés horizontalement (3, 4) sont connectés les uns aux autres de manière indirecte par le biais d'articulations (8, 9, 16, 17) ; et **en ce que** les organes de transmission disposés horizontalement et verticalement (3, 4, 13, 12) sont connectés de manière articulée à un anneau de support (7) qui est disposé à l'extérieur du boîtier de transmission (1).

2. Agencement selon la revendication 1, **caractérisé en ce que** la transmission articulée présente deux organes de transmission disposés verticalement (12, 13) qui sont à chaque fois articulés à la fondation (2).

3. Agencement selon la revendication 1 ou 2, **caractérisé en ce que** la transmission articulée présente deux organes de transmission disposés horizontalement (3, 4) qui sont articulés au boîtier de transmission (1).

4. Agencement selon l'une quelconque des revendications précédentes, **caractérisé en ce que** les organes de transmission disposés horizontalement et verticalement sont réalisés sous forme d'entretoises (3, 4, 12, 13).

5. Agencement selon l'une quelconque des revendications précédentes, **caractérisé en ce que** les articulations sont réalisées sous forme d'articulations pivotantes (5, 6, 8, 9, 14, 15, 16, 17) avec des axes de rotation qui sont disposés parallèlement à l'axe longitudinal de l'arbre d'entrée de transmission (18).

6. Agencement selon la revendication 4 ou 5, **caractérisé en ce que** les entretoises disposées verticalement (12, 13) présentent la même longueur.

7. Agencement selon l'une quelconque des revendications 4 à 6, **caractérisé en ce que** les entretoises disposées horizontalement (3, 4) présentent la même longueur.
